# EUROPÄISCHE PATENTSCHRIFT

(11) **EP 0 931 615 B1**
(45) Veröffentlichungstag und Bekanntmachung des Hinweises auf die Patenterteilung: **19.03.2008**
(21) Anmeldenummer: 99100661.0
(22) Anmeldetag: 14.01.1999
(51) Int. Cl.: B23D 61/02

(54) **Kreissägeblatt mit unterschiedlichen Sägeblattdicken und einseitig vorstehenden Seitenschneiden**
Circular saw blade with varying blade thicknesses and from a single body side projecting side cutters
Lame de scie circulaire à épaisseurs variables avec des éléments de coupe latérale projectant d'un seul côté

(30) Priorität: 15.01.1998 DE 19801121
(43) Veröffentlichungstag der Anmeldung: 28.07.1999
(73) Patentinhaber: Röttger Jansen-Herfeld, 42824 Remscheid (DE)
(72) Erfinder: Jansen-Herfeld, Röttger, Dipl.-Ing., 42853 Remscheid (DE)

(56) Entgegenhaltungen:
- DE-A- 3 244 001
- US-A- 5 537 987
- PATENT ABSTRACTS OF JAPAN vol. 1996, no. 06, 28. Juni 1996 (1996-06-28) & JP 08 039346 A (OSAKA DIAMOND IND CO LTD), 13. Februar 1996 (1996-02-13)

## Beschreibung

Es sind Sägeblätter bekannt, die einen verdickten, konzentrischen Bund im Mittenbereich aufweisen, der auf einer Seite übersteht, um unterschiedliche Schnitthöhen auf den beiden Sägenseiten schneiden zu können, wobei der Bund auf der Seite der geringeren Schnitthöhe angeordnet ist.

Diese Sägeblätter haben den Nachteil, daß sie nur ausserhalb des Bundes und das noch in einem gewissen Abstand durch Seitenschneiden gegen Reibungserwärmung geschützt sind.

Der Erfindung liegt die Aufgabe zugrunde, ein Sägeblatt zu schaffen, das im gesamten Schnitthöhenbereich durch Seitenschneiden geschützt ist. Das erfindungsgemäße Sägeblatt weist Seitenschneiden auf, die bis in den Verdickungsbereich des Bundes reichen bzw. nur dort angeordnet sind und in diesem Bereich nur auf der durchgehenden Seite des Sägeblattes vorstehen, wobei in einer Sonderausführung diese inneren Seitenschneiden bis zur Mittenbohrung des Sägeblattes reichen. Vorzugsweise ist die Bunddicke größer als die Schnittfugenbreite.

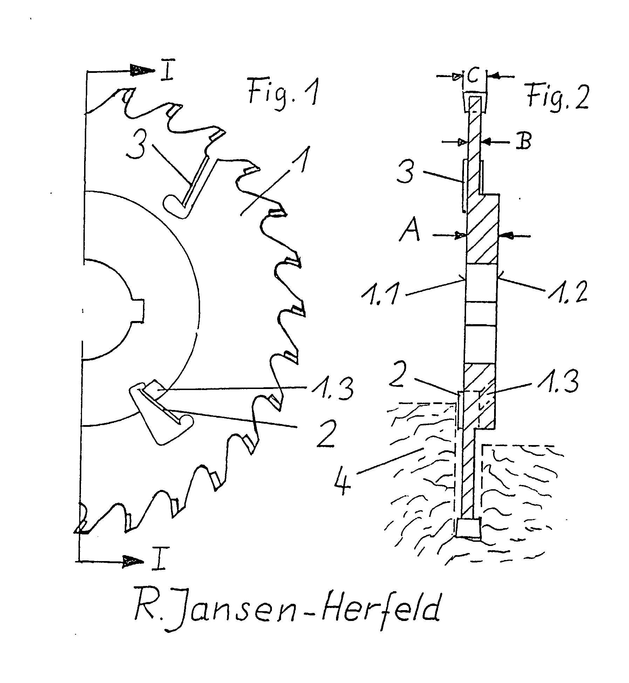

Figur 1 zeigt das Sägeblatt (1) mit den inneren Seitenschneiden (2) und den äusseren Seitenschneiden (3). Die neben den inneren Seitenschneiden (2) angeordneten Abschrägungen (1.3) erleichtern die Spanabfuhr zur Bundseite (1.2)
Figur 2 zeigt Figur 1 nach dem Schnitt I-I mit der durchgehenden Seite (1.1) und der Bundseite (1.2) und der Bunddicke (A), der äusseren Sägendicke (B) und der Schnittfugenbreite (C). Das Werkstück (4) weist auf der durchgehenden Seite (1.1) eine größere Schnittiefe als auf der Bundseite (1.2) auf, wobei die innere Seitenschneide (2) auf der durchgehenden Seite (1.1) noch weiter radial zur Sägenmitte reicht als durch die Schnitthöhe vorgegeben.
   Die Abschrägung (1.3) ist durch gestrichelte Linien in der Kontur dargestellt.

### Bezugszeichenliste

- 1: Sägeblatt
- 1.1: durchgehende Seite
- 1.2: Bundseite
- 1.3: Abschrägung
- 2: innere Seitenschneide
- 3: äussere Seitenschneide
- 4: Werkstück

- A: Bunddicke
- B: äussere Sägendicke
- C: Schnittfugenbreite

## Patentansprüche

1. Kreissägeblatt (1) mit unterschiedlichen Sägeblattdicken wobei das Kreissägeblatt (1) einen äußeren, konzentrischen Bereich mit Dicke (B) und einen verdickten, konzentrischen Bund mit einer Bunddicke (A) im Mittenbereich aufweist, und wobei das Sägeblatt (1) eine durchgehende Seite (1.1), eine Bundseite (1.2) und Seitenschneiden (2,3) aufweist **dadurch gekennzeichnet, dass** mindestens eine innere Seitenschneide (2) bis in den Bund reicht, bzw. nur dort angeordnet ist und in diesem Bereich nur auf der durchgehenden Seite (1.1) vorsteht.

2. Kreissägeblatt mit unterschiedlichen Sägeblattdicken und Seitenschneiden nach Anspruch 1 **dadurch gekennzeichnet, dass** die Bunddicke (A) auf der Bundseite (1.2) weiter vorsteht als die Schnittfugenbreite (C).

3. Kreissägeblatt mit unterschiedlichen Sägeblattdicken und Seitenschneiden nach einem oder mehreren der Ansprüche 1 bis 2 **dadurch gekennzeichnet, dass** die innere Seitenschneide (2) bis zur Mittenbohrung des Sägeblattes (1) reicht.

4. Kreissägeblatt mit unterschiedlichen Sägeblattdicken und Seitenschneiden nach einem oder mehreren der Ansprüche 1 bis 3 **dadurch gekennzeichnet, dass** die äußere Sägendicke (B) nach außen gleichmäßig oder stufenförmig abnimmt.

## Claims

1. A circular saw blade (1) with varying saw blade thicknesses, the circular saw blade (1) having an outer concentric region with a thickness (B) and, in the central region, a thickened concentric collar with a collar thickness (A), and the saw blade (1) having a continuous side (1.1), a collar side (1.2) and side cutting edges (2, 3), **characterized in that** at least one inner side cutting edge (2) extends into the collar, or is located only in the collar, and, in this region, projects only on the continuous side (1.1).

2. A circular saw blade with varying blade thicknesses and side cutting edges according to Claim 1, **characterized in that** the collar thickness (A) on the collar side (1.2) projects farther than the width (C) of the slit cut by the saw.

3. A circular saw blade with varying blade thicknesses and side cutting edges according to one or more of Claims 1 to 2, **characterized in that** the inner side cutting edge (2) extends as far as the central opening of the saw blade (1).

4. A circular saw blade with varying blade thicknesses and side cutting edges according to one or more of claim 1 to 3, **characterised in that** the outer saw thickness (B) decreases outwards uniformly or stepwise.

## Revendications

1. Lame de scie circulaire (1) avec différentes épaisseurs de lame de scie, la lame de scie circulaire (1) présentant une région extérieure, concentrique avec une épaisseur (B) et une collerette épaissie, concentrique avec une épaisseur de collerette (A) dans la région centrale, et la lame de scie (1) présentant une face continue (1.1), une face de collerette (1.2) et des éléments de coupe latérale (2, 3), **caractérisée en ce qu'**au moins un élément de coupe (2) intérieur s'étend jusque dans la collerette, respectivement est agencé uniquement dans la collerette, et ne dépasse dans cette région que sur la face continue (1.1).

2. Lame de scie circulaire avec différentes épaisseurs de lame de scie et des éléments de coupe latérale selon la revendication 1, **caractérisée en ce que** l'épaisseur de collerette (2) dépasse sur la face de collerette (1.2) au-delà de la largeur des rainures de coupe (C).

3. Lame de scie circulaire avec différentes épaisseurs de lame de scie et des éléments de coupe latérale selon une ou plusieurs des revendications 1 à 2, **caractérisée en ce que** l'élément de coupe latérale intérieur (2) s'étend jusqu'à l'alésage central de la lame de scie (1).

4. Lame de scie circulaire avec différentes épaisseurs de lame de scie et des éléments de coupe latérale selon une ou plusieurs des revendications 1 à 3, **caractérisée en ce que** l'épaisseur de lame extérieure (B) diminue vers l'extérieur de manière régulière ou par étages.
